# EUROPEAN PATENT APPLICATION

(11) **EP 2 818 807 A1**
(43) Date of publication of application: **31.12.2014**
(21) Application number: 13751739.7
(22) Date of filing: 22.02.2013
(51) Int. Cl.: F24J 2/54, F24J 2/10

(54) **DISH-TYPE SOLAR CONCENTRATION DEVICE**

(30) Priority: 22.02.2012 CN 201210041000
(71) Applicant: Xiangtan Electric Manufacturing Co., Ltd, Xiangtan, Hunan 411101 (CN)
(72) Inventor: WANG, Shuhui, Xiangtan Hunan 411101 (CN); WANG, Minhui, Xiangtan Hunan 411101 (CN); WANG, Bugen, Xiangtan Hunan 411101 (CN); LI, Yueying, Xiangtan Hunan 411101 (CN); MOU, Mi, Xiangtan Hunan 411101 (CN); HUANG, Min, Xiangtan Hunan 411101 (CN)
(74) Representative: Ahmad, Sheikh Shakeel
(86) International application number: PCT/CN2013/000168
(87) International publication number: WO 2013/123825

(57) **Abstract**

The present invention discloses a dish-type solar concentration device, comprising a reflection surface (3), a heat absorber (4) and a dish-type support frame (5) being provided above and below the reflection surface (3), respectively; further comprising a rigid turntable (11) and a circular orbit (27) fixed onto the ground, the rigid turntable (11) being connected in a rotary manner to the circular orbit (27) through a plurality of bearing wheels (12), at least one support and one fixed leg (10) being provided on the rigid turntable (11), a driving mechanism for adjusting an elevation angle of the dish-type support frame (5) being provided on the top end of the support, and the top end of the driving mechanism and the top end of the fixed leg (10) being articulated to the dish-type supporting frame (5) by two first horizontal articulating shafts (8) parallel to each other. By such a structure, the stability and strength of the dish-type solar concentration device can be enhanced.

## Description

### Technical Field

The present invention relates to the solar power generation technologies, in particular to a dish-type solar concentration device.

### Background of the Invention

With advantages of infinite reserve volume, widespread distribution, clean utilization and economic benefit, solar energy is regarded as one of the most prospective new energy sources that are the best solutions to solve the increasing demand on energy in the future development of the society.

Solar power generation is a major method to generate new energy resources from solar energy, including two paths, i.e., photovoltaic power generation and photo-thermal power generation, wherein solar thermal power generation is regarded as an important development direction of the future solar power generation and utilization due to characteristics such as good suitability with grid load, high photoelectric conversion efficiency, easy generation of scale effects, more environmentally friendly manufacturing process of consumables and good power adjustability. There are several concentration ways for solar thermal power generation, mainly including parabolic trough, power tower and parabolic dish. With features such as flexible deployment and high focusing as well as advantage of higher energy utilization coefficient, dish-type thermal power generation system has been paid more and more attention.

A dish-type solar concentration device usually includes a dish-type reflection surface and a dish-type support frame disposed below the reflection surface, with a heat absorber being disposed above the reflection surface. The heat absorber is a major component used for absorbing solar energy. When in working, by adjusting the specific position of the dish-type support frame, the specific position of the dish-type reflection surface is adjusted so that the dish-type reflection surface concentrates sunlight; and focal spots formed after that concentration enter the heat absorber so that the heat absorber absorbs the energy of sunlight. Then, the working medium of the heat engine reaches a high temperature.

At present, the single unit power of dish-type power generation systems ranges from hundreds of watts to hundreds of kilowatts. Correspondingly, the light collection area of concentration devices also ranges from several square meters to hundreds of square meters. A dish-type concentration device with a large light collection area should have good rigidity to ensure that the net rack on which the reflection surface is mounted has no excessive deformation and to avoid excessive deformation of the focal spots or incomplete entering of the focal spots into the rational light collection range of the heat absorber caused by too much deviation of the reflection surface away from the theoretical design position. However, such a dish-type concentration device should also have enough strength against the damage of heavy wind. In addition, the whole concentration system must have proper self-vibration characteristic to avoid being damaged by resonance generated by the disturbance of external force.

Accordingly, how to further optimize the design of the above dish-type solar concentration device with a large light collection area to allow the dish-type solar concentration device to have enough strength and to improve its stability and wind resistance.

### Summary of the Invention

A technical problem to be solved by the present invention is to provide a dish-type solar concentration device to allow it to have enough strength and to improve its stability and wind resistance.

To achieve the above object, the present invention provides a dish-type solar concentration device, comprising a reflection surface, a heat absorber and a dish-type support frame being provided above and below the reflection surface, respectively; further comprising a rigid turntable and a circular orbit fixed onto the ground, the rigid turntable being connected in a rotary manner to the circular orbit through a plurality of bearing wheels, at least one support and one fixed leg being provided on the rigid turntable, a driving mechanism for adjusting an elevation angle of the dish-type support frame being provided on the top end of the support, and the top end of the driving mechanism and the top end of the fixed leg being articulated to the dish-type supporting frame by two first horizontal articulating shafts parallel to each other.

Preferably, the dish-type solar concentration device further comprises:
a sun azimuth detection component, a wind speed detection component, an azimuth angle detection component and an elevation angle detection component ,which are respectively used for detecting the sun azimuth, the current wind speed, and the azimuth angle and elevation angle of the dish-type support frame;
a controller, connected to the sun azimuth detection component, the wind speed detection component, the azimuth angle detection component and the elevation angle detection component, used for outputting a control signal according to the sun azimuth and the current wind speed, adjusting the azimuth angle of the rigid turntable with respect to the circular orbit and driving the driving mechanism to adjust the elevation angle of the dish-type supporting frame.

Preferably, the circular orbit is provided with a transverse first limiting plate, a first web plate disposed below the first limiting plate and a first mounting plate disposed at the bottom end of the first web plate;
among the plurality of the bearing wheels, a roller wheel and at least one power wheel are provided, each of the roller wheel and the power wheel comprising a wheel seat, a first load bearing wheel, a first limiting wheel and at least one lateral support plate , the wheel seat being connected to the bottom end of the rigid turntable, the first load bearing wheels of both the roller wheel and the power wheel being respectively mounted on the wheel seat by an axle and a transmission shaft, the first load bearing wheel being connected to the first limiting plate by rolling fit; and the lateral support plate is fixed on the outside of the wheel seat while the first limiting wheel is disposed on the inside of the bottom end of the lateral support plate, and the first limiting wheel being connected to the bottom wall of the first limiting plate in a rolling manner;
the power wheel further comprises an azimuth angle motor driving the rigid turntable to rotate with respect to the circular orbit and an azimuth angle decelerator connected to the output shaft of the azimuth angle motor.

Preferably, a first projection is provided at the top end of the first limiting plate, and a first recess for fitting with the first projection is provided on the periphery of the first load bearing wheel ;

Or a side rack is provided at the top end of the first limiting plate, and a first gear engaged with the side rack is provided on the periphery of the first load bearing wheel.

Preferably, the first projection is a guide rail integrated with the circular orbit or otherwise a rail bar connected to the circular orbit by a first fastener.

Preferably, the output shaft of the azimuth angle decelerator is connected to the transmission shaft;
Or when there is one lateral support plate of the power wheel, a gear ring is provided on the inside of the first web plate, and a cylindrical gear engaged to the gear ring is provided outside the output shaft of the azimuth angle decelerator, the azimuth angle decelerator being connected to the wheel seat;
Or when there is one lateral support plate of the power wheel, a gear ring is provided on the inside of the rigid turntable, and a cylindrical gear engaged to the gear ring is provided outside the output shaft of the azimuth angle decelerator, the azimuth angle decelerator being connected to the first web plate.

Preferably, when there is one lateral support plate of the power wheel and the first limiting plate is provided on one side of the first web plate, the circular orbit further comprises a rib plate, the top wall, side wall and bottom wall of the rib plate being connected to the first limiting plate, the first web plate and the first mounting plate, respectively.

Preferably, the support is a fixed support, and the driving mechanism comprises an elevation angle motor, an elevation angle decelerator provided at the output end of the elevating motor and a threaded rod articulated to the fixed support by a second articulating shaft parallel to the first horizontal articulating shafts, the elevation angle decelerator being a decelerator used for driving the threaded rod to do axially telescopic movement with respect to the elevation angle decelerator.

Preferably, a "herringbone" straining beam and an outrigger passing through the inside and outside of the rigid turntable are provided inside the rigid turntable, the inner end of the outrigger being connected to the straining beam, a slide rail being provided on the outrigger, a spur rack being provided on the slide rail;
the support is specifically a slide seat, and the driving mechanism comprises an elevation angle motor provided on the slide seat, an elevation angle decelerator and a movable supporting beam, the elevation angle decelerator being provided with an elevation angle gear engaged with the spur rack, the top end of the movable supporting beam being connected to the dish-type supporting frame.

Preferably, the slide rail comprises a second limiting plate, a second web plate and a second mounting plate provided at the bottom end of the second web plate;
a guide bar is provided on the second limiting plate, and a second load bearing wheel and a second limiting wheel are provided on the bottom of the slide seat, a second recess fitted with the guide bar being provided on the peripheral wall of the second load bearing wheel, the second limiting wheel being connected to the second limiting plate in a rolling manner;

Or sliders are provided on two sides inside the slide seat, a third recess fitted with the second limiting plate being provided on each of the sliders.

Preferably, a "herringbone" straining beam and an outrigger passing through the inside and outside of the rigid turntable are provided inside the rigid turntable, the inner end of the outrigger being connected to the straining beam, the slide rail being provided on the outrigger;
the support is specifically a movable support in sliding connection with the slide rail; and the driving mechanism comprises a movable support frame of which the top end and bottom end are respectively connected to the dish-type support frame and the movable support, and further comprises the elevation angle motor and the elevation angle decelerator which are fixedly connected to the slide rail, threads being provided inside the movable support, the elevation angle decelerator being connected to the movable support by a screw rod which is in fitting connection with the threads.

Preferably, there are two fixed legs and one support, and the two fixed legs are symmetrically provided on two sides of the support.

Preferably, the bottom end of the dish-type support frame is provided with weights on the outside of the fixed legs, the weights being provided on the symmetry planes of the two fixed legs.

Preferably, transverse outriggers are symmetrically connected to the outside of the rigid turntable, and the fixed legs are provided on the transverse outriggers.

Preferably, a "-"-shaped straining beam is connected between the two transverse outriggers; or, a "T"-shaped straining beam is connected between the two transverse outriggers, the two transverse ends of the "T"-shaped straining beam being connected to the two transverse outriggers, respectively.

The dish-type solar concentration device provided by the present invention comprises a rigid turntable and a circular orbit fixed onto the ground, the rigid turntable being connected in a rotary manner to the circular orbit through a plurality of bearing wheels, at least one support and one fixed leg being provided on the rigid turntable, a driving mechanism for adjusting an elevation angle of the dish-type support frame being provided on the top end of the support, and the top end of the driving mechanism and the top end of the fixed leg being articulated to the dish-type supporting frame by two first horizontal articulating shafts parallel to each other.

By such a structure, when in operating, the rigid turntable and the circular orbit form a huge rotary bearing; the rigid turntable may adjust the azimuth angle of the dish-type reflection surface with respect to the circular orbit; and the driving mechanism may adjust the elevation angle of the dish-type support frame. In this way, the adjustment of the dish-type support frame in all directions may be achieved. The heat absorber may track the sun to arrive at an expected working position, when the irradiation angle of sunlight changes, by adjusting the azimuth angle and elevation angle of the dish-type support frame. As the structure formed by the rigid turntable 11 and the circular orbit 27 has high stability and strength, the stability and strength of the whole concentration device are improved, so that the concentration device has high wind resistance. In addition, due to a trussed structure, the concentration device is allowed to have the advantages of small mass and saved production cost.

### Brief Description of the Drawings

Fig. 1 is a structural diagram of a dish-type solar concentration device according to a first embodiment of the present invention;
Fig. 2 is a schematic diagram of working principle of Fig. 1;
Fig. 3 is a view of Fig. 1 made along line C;
Fig. 4 is a structural diagram of connection at a power wheel of the dish-type solar concentration device of the present invention according to a first embodiment, and shows a partially enlarged view of position I of Fig. 1;
Figs. 5-8 are structural diagrams of connection at the power wheel of the dish-type solar concentration device of the present invention according to a second, a third, a fourth and a fifth embodiments;
Fig. 9 is a structural diagram of connection at a roller wheel of the dish-type solar concentration device of the present invention according to a first embodiment;
Figs. 10-14 are structural diagrams of a circular orbit of the dish-type solar concentration device of the present invention according to a first, second, third, fourth and fifth embodiments;
Fig. 15 is a structural diagram of a dish-type solar concentration device according to a second embodiment of the present invention;
Fig. 16 is a structural diagram showing that the reflection surface of Fig. 15 is in a horizontal position;
Fig. 17 is a left view of Fig. 15;
Figs. 18-21 are structural diagrams of a rigid turntable of the dish-type solar concentration device of the present invention according to a first, a second, a third, a fourth and a fifth embodiments;
Fig. 22 is a structural diagram of a dish-type solar concentration device according to a third embodiment of the present invention;
Fig. 23 is a partially enlarged view of position II of Fig. 22;
Fig. 24 is a cutaway view of Fig. 23, made along line B-B;
Fig. 25 is a structure diagram of a cutaway view of Fig. 23, made along line D-D, according to a first embodiment;
Fig. 26 is a structure diagram of a cutaway view of Fig. 23, made along line D-D, according to a second embodiment;
Fig. 27 is a structural diagram of a dish-type solar concentration device according to a fourth embodiment of the present invention;
Fig. 28 is a partially enlarged view of position III of Fig. 27;
Fig. 29 is a cutaway view of Fig. 28, made along line E-E;
Fig. 30 is a structural diagram of a rigid turntable of a dish-type solar concentration device according to a fifth embodiment of the present invention;
Fig. 31 is an isometric drawing of a movable support;

The corresponding relations between the reference numbers and the components in the drawings are as follows:

| | | |
|---|---|---|
| 1-Sun azimuth detection component | 2-Wind speed detection component | 3-Reflection surface |
| 4-Heat absorber | 5-Dish-type support frame | 6-Weight |
| 7-First articulating seat | 8-First horizontal articulating shaft | 9-Elevation angle detection component |
| 10-Fixed leg | 11-Rigid turntable | 12-Bearing wheel |
| 13-Azimuth angle detection component | 14-Second articulating seat | 15-Elevation angle motor |
| 16-Elevation angle decelerator | 17-First decelerator seat | 18-Fixed support |
| 19-Threaded rod | 20-Signal line | 21-Controller |
| 22-Wheel seat | 23-First load bearing wheel | 24-Transmission shaft |
| 25-Lateral support plate | 26-First limiting wheel | 27-Circular orbit |
| 28-Fixed foundation | 29-Azimuth angle motor | 30-Azimuth angle decelerator |
| 31-Second decelerator mounting base | 32-Decelerator mounting plate | 33-Side rack |
| 34-First gear | 35-Internal gear ring | 36-Cylindrical gear |
| 37-Third decelerator mounting base | 38-Fourth decelerator mounting base | 39-Axle |
| 40-Guide rail | 41-First limiting plate | 42-First web plate |
| 43-First mounting plate | 44-First fastener | 45-Rail bar |
| 46-Rib plate | 47-Limiting sidewall | 48-Second fastener |
| 49-Transverse outrigger | 50-Straining beam | 51-Movable supporting beam |
| 52-Slide rail | 53-Spur rack | 54-Outrigger |
| 55-Slide seat | 56-Guide bar | 57-Elevation angle gear |
| 58-Second load bearing wheel | 59-Second wheel | limiting 60-Slider |
| 61-Screw rod | 62-Movable support | |

### Detailed Description of the Invention

The concept of the present invention is to provide a dish-type solar concentration device which has enough strength and improves the stability and wind resistance.

To make a person skilled in the art better understand the technical solution of the present invention, the present invention will be described in details below with reference to the accompanying drawings. The description of this part is merely exemplary and illustrative, and should not be regarded as any limitation to the scope of the present invention.

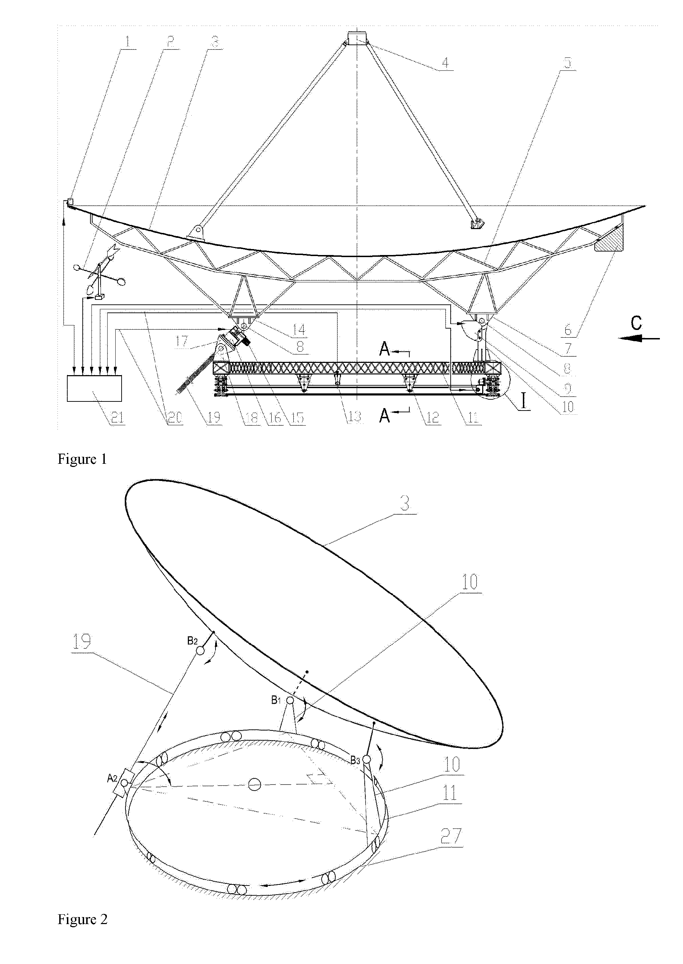

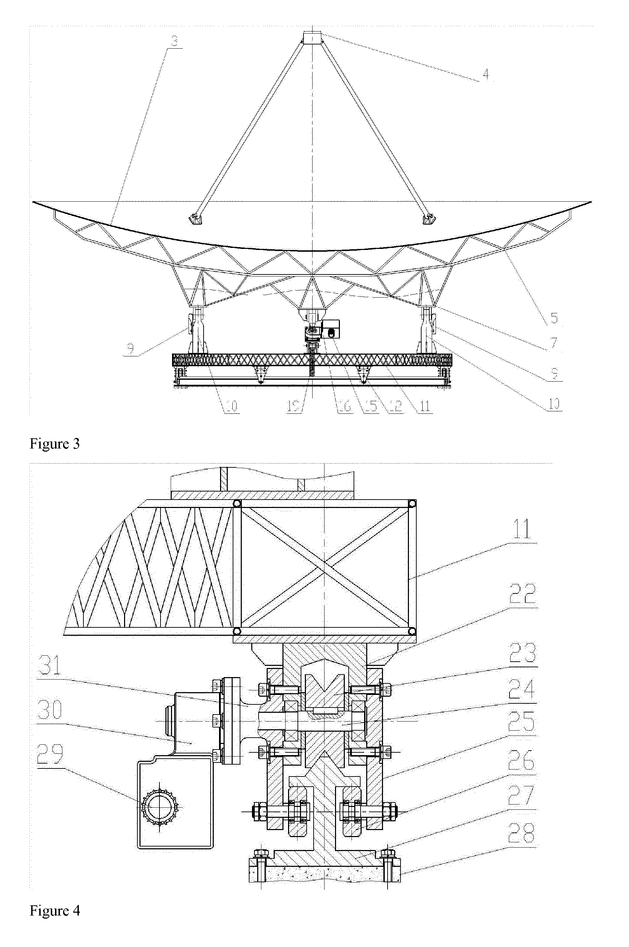

Referring to Figs. 1-3, Fig. 1 is a structural diagram of a dish-type solar concentration device according to an embodiment of the present invention; Fig. 2 is a schematic diagram of the working principle of Fig. 1; and Fig. 3 is a view of Fig. 1, made along line C.

In an embodiment, as shown in Fig.1, the present invention provides a dish-type solar concentration device, including a reflection surface 3, a heat absorber 4 and a dish-type support frame 5 being provided above and below the reflection surface 3, respectively, the heat absorber 4 being used for absorbing sunlight, the dish-type support frame 5 being used for supporting the reflection surface 3. The dish-type solar concentration device further includes a rigid turntable 11 and a circular orbit 27 that may be fixed to the ground by a fixed foundation 28, the rigid turntable 11 being connected in a rotary manner to the circular orbit 27 through a plurality of bearing wheels 12, at least one support and one fixed leg 10 being provided on the rigid turntable 11, a driving mechanism for adjusting the elevation angle of a supporting frame 5 being provided on the top end of the support, the top end of the support and the top end of fixed leg 10 being articulated to the dish-type support frame 5 by two first horizontal articulating shafts 8 parallel to each other. The top end of the driving mechanism and the first horizontal articulating shafts 8 at the top end of the fixed leg 10 may be provided inside a second articulating seat 14 and a first articulating seat 7.

By such a structure, when in operating, the rigid turntable 11 and the circular orbit 27 form a huge rotary bearing; the rigid turntable 11 may adjust the azimuth angle of the dish-type reflection surface 3 with respect to the circular orbit 27; and the driving mechanism may adjust the elevation angle of the dish-type support frame 5. In this way, the adjustment of the dish-type support frame 5 in all directions may be achieved. The heat absorber 4 may track the sun to arrive at an expected working position, when the irradiation angle of sunlight changes, by adjusting the azimuth angle and elevation angle of the dish-type support frame 5. As the structure formed by the rigid turntable 11 and the circular orbit 27 has high stability and strength, the stability and strength of the whole concentration device are improved, so that the concentration device has high wind resistance. In addition, due to a trussed structure, the concentration device is allowed to have the advantages of small mass and saved production cost.

In a further solution, as shown in Fig. 1, the dish-type solar concentration device described above further includes a sun azimuth detection component 1, a wind speed detection component 2, an azimuth angle detection component 13 and an elevation angle detection component 9, which are respectively used for detecting the sun azimuth, the current wind speed, and the azimuth angle and elevation angle of the dish-type support frame 5; and the dish-type solar concentration device further includes a controller 21, through signal line 20, connected to the sun azimuth detection component 1, the wind speed detection component 2, the azimuth angle detection component 13 and the elevation angle detection component 9 respectively, used for outputting a control signal according to the sun azimuth and the current wind speed, adjusting the azimuth angle of the rigid turntable 11 with respect to the circular orbit 27 and driving the driving mechanism to adjust the elevation angle of the dish-type support frame 5.

Specifically, the sun azimuth detection component 1, the wind speed detection component 2, the azimuth angle detection component 13 and the elevation angle detection component 9 described above may all use sensors, wherein the wind speed detection component 2 may be provided at a position far enough away from the dish-type support frame 5, to detect the change of wind speed and wind direction within a large range; the azimuth angle sensor may be provided between the rigid turntable 11 and the circular orbit 27; and the elevation angle sensor may be provided between the dish-type support frame 5 and the fixed leg 10. The use of sensors may quickly and precisely realize the measurement of each parameter.

With such a structure, when in operating, each of the detection components transfers the result of detection to the controller 21; the controller 21, according to factors such as the sun azimuth, current wind speed and the current operating state of the heat absorber 4, outputs a control signal, so that the rigid turntable 11 rotates with respect to the circular orbit 27 to adjust the azimuth angle of the dish-type support frame 5, meanwhile the driving mechanism moves to adjust the elevation angle of the dish-type support frame 5. Then, the all-directional adjustment of the operating position of the dish-type solar concentration device is achieved. Thus it can be seen that, by the above electrical control manner, the solar concentration device may be allowed to track sunlight in real time, and both the heat absorption and operating reliability of the heat absorber 4 are further improved.

The specific way of rotary connection of the rigid turntable 11 and the circular orbit 27 may be further configured.

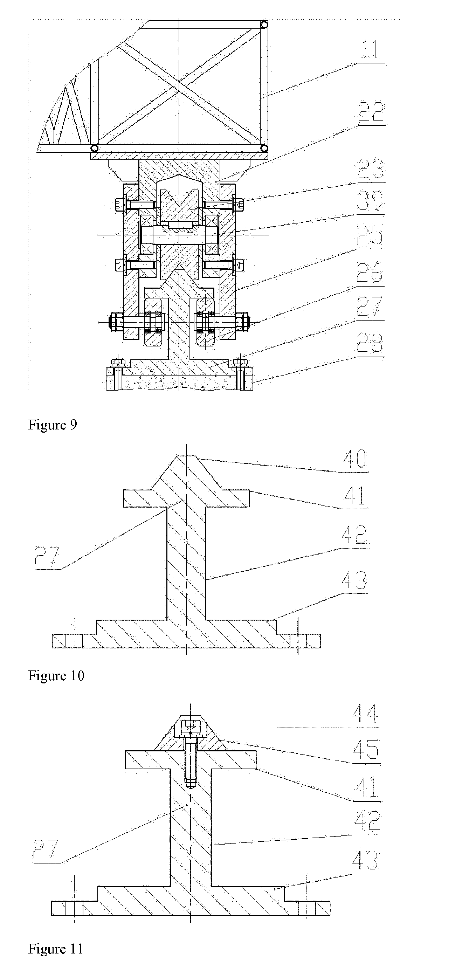

Referring to Fig. 4 and Fig. 9, Fig. 4 is a structural diagram of connection at a power wheel of the dish-type solar concentration device of the present invention according to a first embodiment, and shows a partially enlarged view of position I of Fig. 1; Fig. 9 is a structural diagram of connection at a roller wheel of the dish-type solar concentration device of the present invention according to a first embodiment.

In a specific solution, the above circular orbit 27 is provided with a transverse first limiting plate 41, a first web plate 42 disposed below the first limiting plate 41, and a first mounting plate 43 disposed at the bottom end of the first web plate 42; among the plurality of the bearing wheels 12, a roller wheel and at least one power wheel are provided, each of the roller wheel and the power wheel comprising a wheel seat 22, a first load bearing wheel 23, a first limiting wheel 26 and at least one lateral support plate 25, the wheel seat 22 being connected to the bottom end of the rigid turntable 11, the first load bearing wheels 23 of both the roller wheel and the power wheel being respectively mounted on the wheel seat 22 by an axle 39 and a transmission shaft 24, the first load bearing wheel 23 being connected to the first limiting plate 41 by rolling fit; and the lateral support plate 25 is fixed on the outside of the wheel seat 22 while the first limiting wheel 26 is disposed on the inside of the bottom end of the lateral support plate 25, the first limiting wheel 26 being connected to the bottom wall of the first limiting plate 41 in a rolling manner; the power wheel further comprises an azimuth angle motor 29 driving the rigid turntable 11 to rotate with respect to the circular orbit 27 and an azimuth angle decelerator 30 connected to the output shaft of the azimuth angle motor 29. Specifically, the azimuth angle decelerator 30 described above may be connected to the transmission shaft 24 through a second decelerator mounting base 31.

With such a structure, when in operating, the azimuth angle motor 29 is started; after the deceleration of a certain transmission ratio of the azimuth angle decelerator 30, the azimuth angle decelerator 30 drives the power wheel to rotate along the circular orbit 27 and further drives the roller wheel to roll along the circular orbit 27, so that the whole huge rigid turntable 11 rotates with respect to the circular orbit 27; at the same time, the roller wheel functions to support the dish-type support frame 5 during the rotation of the rigid turntable 11. Thus it can be seen that, by such a "driving by power wheel and auxiliary supporting by roller wheels" structure, the rotation of the rigid turntable 11 may be realized conveniently.

In a more specific solution, the load bearing wheel described above may be connected to the first limiting plate 41 of the circular orbit 27 in a rolling manner by the following structures.

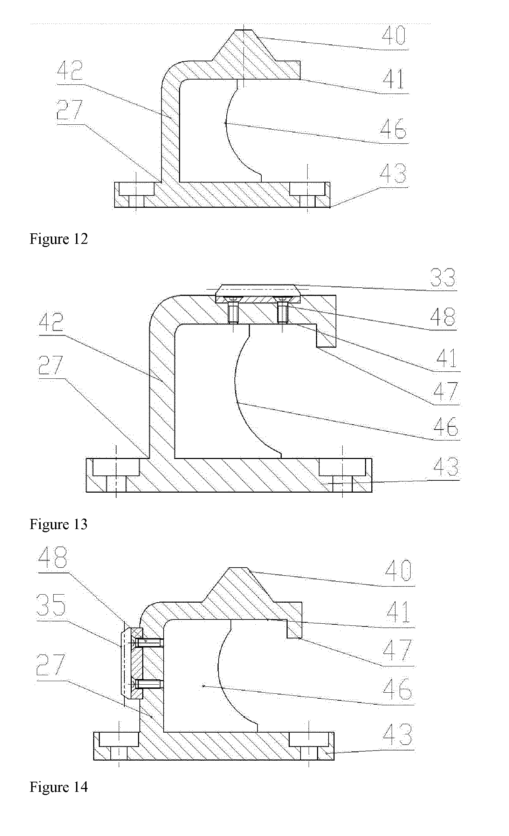

First, as shown in Fig. 4, Fig. 5, Figs. 10-12 and Fig. 14, Fig. 5 is a structural diagram of connection at the power wheel of the dish-type solar concentration device of the present invention according to a second embodiment; Figs. 10-12 and Fig.14 are structural diagrams of a first, second, third and fifth embodiments of a circular orbit 27 of the dish-type solar concentration device of the present invention. In the above drawings, a first projection is provided at the top end of the first limiting plate 41 of the circular orbit 27, and a first recess fitted with the first projection is provided on the periphery of the first load bearing wheel 23. At this time, the azimuth angle decelerator 30 may be mounted on the wheel seat through a decelerator mounting plate 32. Specifically, as shown in Fig.10, Fig. 12 and Fig. 14, the first projection is a guide rail 40 integrally formed with the circular orbit 27; certainly, as shown in Fig. 13, the first projection may be a rail bar 45 connected to the circular orbit 27 through a first fastener 44.

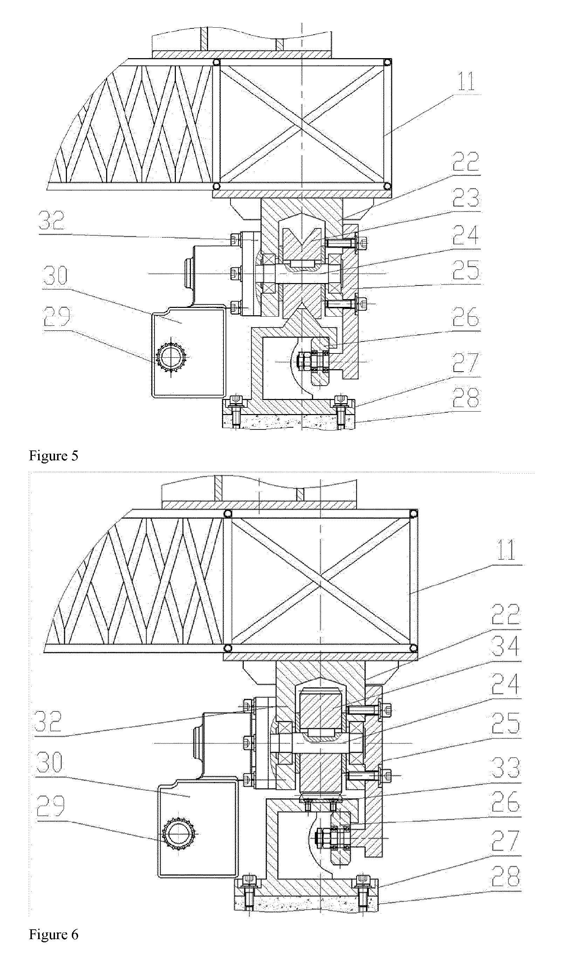

Second, as shown in Fig. 6 and Fig.13, Fig. 6 is a structural diagram of connection at the power wheel of the dish-type solar concentration device of the present invention according to the third embodiment, and Fig. 13 is a structural diagram of a circular orbit 27 of the present invention according to a fourth embodiment. In the above drawings, a side rack 33 is provided at the top end of the first limiting plate 41 of the circular orbit 27, and a first gear 34 engaged with the side rack 33 is provided on the periphery of the first load bearing wheel 23. Specifically, the side rack 33 described above may be fixed onto the first limiting plate 41 through a second fastener 48.

No matter whether the first projection is fit connected to the first recess in a rolling manner or the side rack 33 is engaged with the first gear 34, functions of guide and positioning may be achieved, thereby achieving the stable rolling of the first load bearing wheel 23 and the circular orbit 27, avoiding sliding or relative movement, ensuring the stability of rotation of the rigid turntable 11 with respect to the circular orbit 27. The user may choose according to actual requirements.

Furthermore, the elevation angle decelerator 30 may be connected to the circular orbit 27 in the following ways.

First, as shown in Fig. 4 and Fig. 5, the output shaft of the elevation angle decelerator 30 is connected to the transmission shaft 24. With such a structure, during operating, the torque of the azimuth angle motor 29 is directly transferred to the transmission shaft 24 via the elevation angle decelerator 30, to drive the transmission shaft 24 to move at a certain speed relatively to the circular orbit 27, so as to drive the whole rigid turntable 11 to rotate with respect to the circular orbit 27. Then, the elevation angle of the dish-type solar concentration device is adjusted.

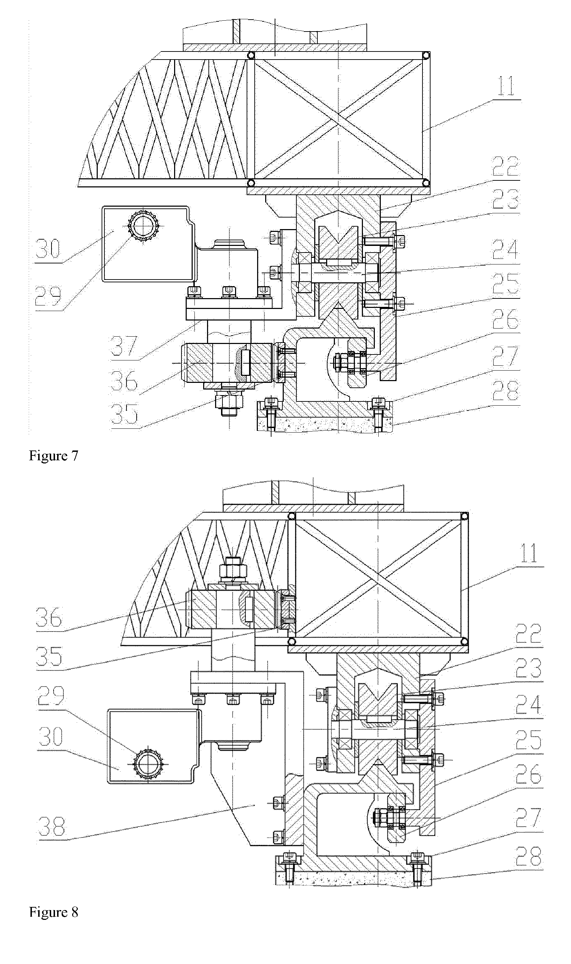

Second, as shown in Fig. 7 and Fig. 14, Fig. 7 is a structural diagram of connection at the power wheel of the dish-type solar concentration device of the present invention according to a fourth embodiment, and Fig. 14 is a structural diagram of the circular orbit 27 according to a fifth embodiment; when there is only one lateral support plate 25 of the power wheel, a gear ring 35 is provided on the inside of the first web plate 42, and a cylindrical gear 36 engaged to the gear ring 35 is provided outside the output shaft of the azimuth angle decelerator 30, the azimuth angle decelerator 30 being connected to the wheel seat 22. In this way, when the azimuth angle motor 29 outputs a torque to the azimuth angle decelerator 30, the azimuth angle decelerator 30 implements its rotary motion with respect to the circular orbit 27 through the transmission mechanism that the cylindrical gear 36 is engaged with the gear ring 35. As the azimuth angle decelerator 30 is connected to the wheel seat 22, the movement of the azimuth angle decelerator 30 drives the wheel seat 22 and the rigid turntable 11 to do rotary motion with respect to the circular orbit 27.

Third, as shown in Fig. 8 which is a structural diagram of connection at the power wheel of the dish-type solar concentration device of the present invention according to a fifth embodiment; in the figure, there is one lateral support plate of the power wheel, a gear ring 35 is provided on the inside of the rigid turntable 11, and a cylindrical gear 36 engaged to the gear ring 35 is provided outside the output shaft of the azimuth angle decelerator 30, the azimuth angle decelerator 30 being connected to the first web plate 42. In this way, when the azimuth angle motor 29 outputs a torque to the azimuth angle decelerator 30, the azimuth angle decelerator 30 implements its relative motion with respect to the circular orbit 27 through the transmission mechanism in which the cylindrical gear 36 is engaged with the gear ring 35. As the azimuth angle decelerator 30 is connected to the first web plate 42, the movement of the azimuth angle decelerator 30 drives the rigid turntable 11 to do rotary motion with respect to the circular orbit 27.

Thus it can be seen that, in the above three ways, by respectively outputting a torque to the transmission shaft 24, the circular orbit 27 and the rigid turntable 11 by a same driving mechanism, the rigid turntable 11 may be driven to rotate with respect to the circular orbit 27 conveniently and easily, so that the elevation angle of the dish-type solar concentration device is adjusted. The user may carry out adjustment according to actual requirements.

In a more specific solution, there may be two or one lateral support plate 25 of the power wheel. The above first limiting plate 41 may further have a limiting sidewall 47, and the first limiting wheel 26 may be arranged to fit the limiting sidewall 47. When there is 1 lateral plate of the power wheel and the first limiting 41 of the circular orbit 27 is provided on one side of the first web plate 42, as shown in Figs. 12-14, the circular orbit 27 may further include a rib plate 46, the top wall, side wall and bottom wall of the rib plate 46 being connected to the first limiting plate 41, the first web plate 42 and the first mounting plate 43, respectively.

The use of the rib plate 46 may increase the strength of the circular orbit 27, thereby avoiding deformation, strength degradation or other problems caused when one side of the circular orbit 27 is stressed heavily while the other side thereof is stressed slightly, and further enhancing the working reliability of the circular orbit 27.

The specific way for driving the adjustment of elevation angle of the dish-type solar concentration device may be further configured.

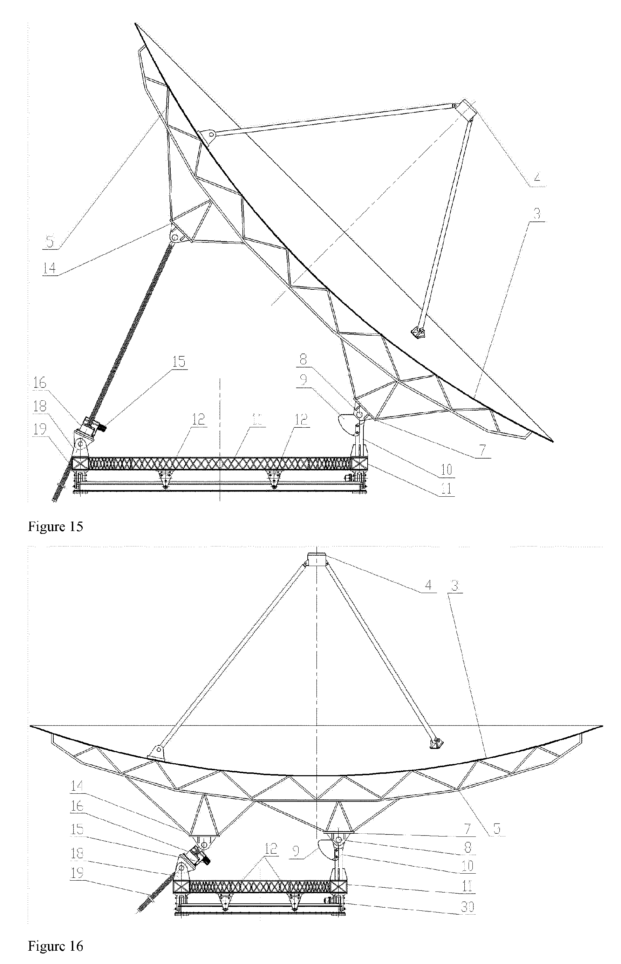

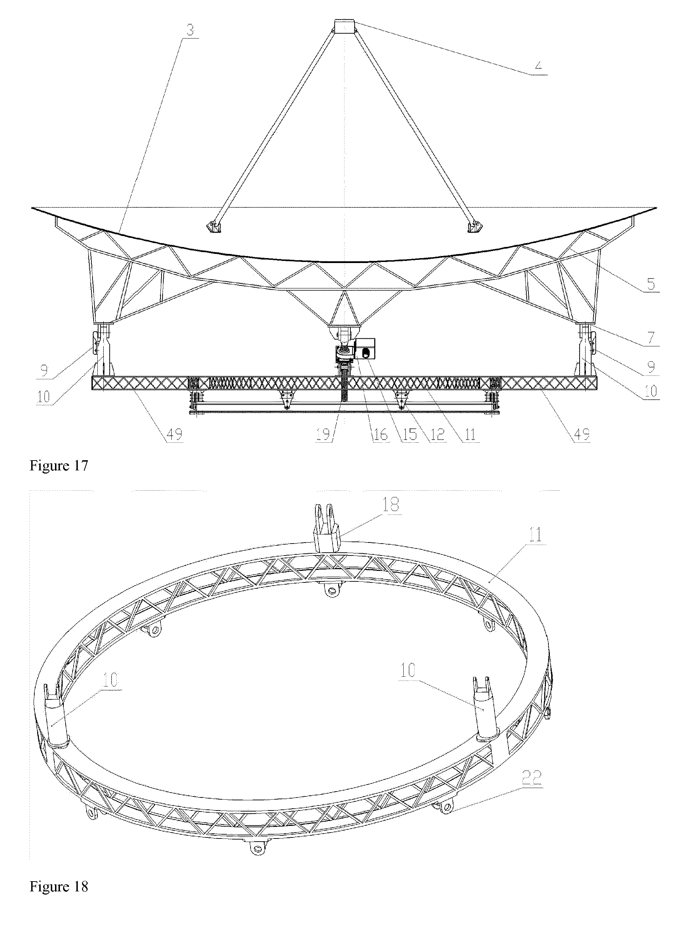

Referring to Fig. 1 and Figs. 15-17, Fig. 15 is a structural diagram of a of a dish-type solar concentration device according to a second embodiment of the present invention; Fig. 16 is a structural diagram showing that the reflection surface 3 of Fig. 15 is in a horizontal position; and Fig. 17 is a left view of Fig. 15.

In an embodiment, the support in the above drawings may be a fixed support 18, and the driving mechanism comprises an elevation angle motor 15, an elevation angle decelerator 16 provided at the output end of the elevating motor 15 and a threaded rod 19, the threaded rod 19 being articulated to the fixed support 18 by a second articulating shaft parallel to the first horizontal articulating shafts 8, the elevation angle decelerator16 being a decelerator used for driving the threaded rod 19 to do axially telescopic movement with respect to the elevation angle decelerator 16. Specifically, the elevation angle decelerator 16 is provided on the first decelerator seat 17, the first decelerator seat 17 is articulated to the fixed support 18, and the output shaft of the elevation angle decelerator 16 is directly connected to the threaded rod 19.

With such a structure, the elevation angle motor 15 after started provides motive power, and the motive power is transferred to the elevation angle decelerator 16, the elevation angle decelerator 16 drives the threaded rod 19 to do telescopic movement with respect to the axial direction of the elevation angle decelerator 16. As the threaded rod 19 is articulated to the fixed support 18 by the second articulating shaft, the threaded rod 19 will drive the dish-type support frame 5 to move upward while extending, thereby increasing the elevation angle of the dish-type support frame 5; and the threaded rod 19 will drive the dish-type support frame 5 to move downward while contracting, thereby decreasing the elevation angle of the dish-type support frame 5. Thus it can be seen that such structure may achieve simple and convenient adjustment of the elevation angle of the dish-type support frame 5, so that the strength and stability of the dish-type solar concentration device is further enhanced.

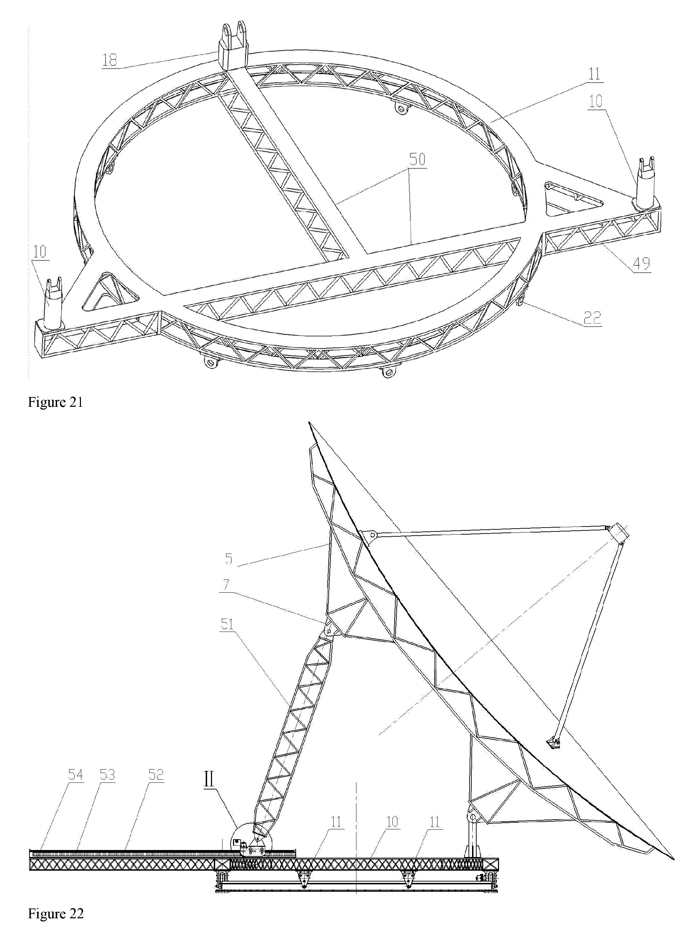

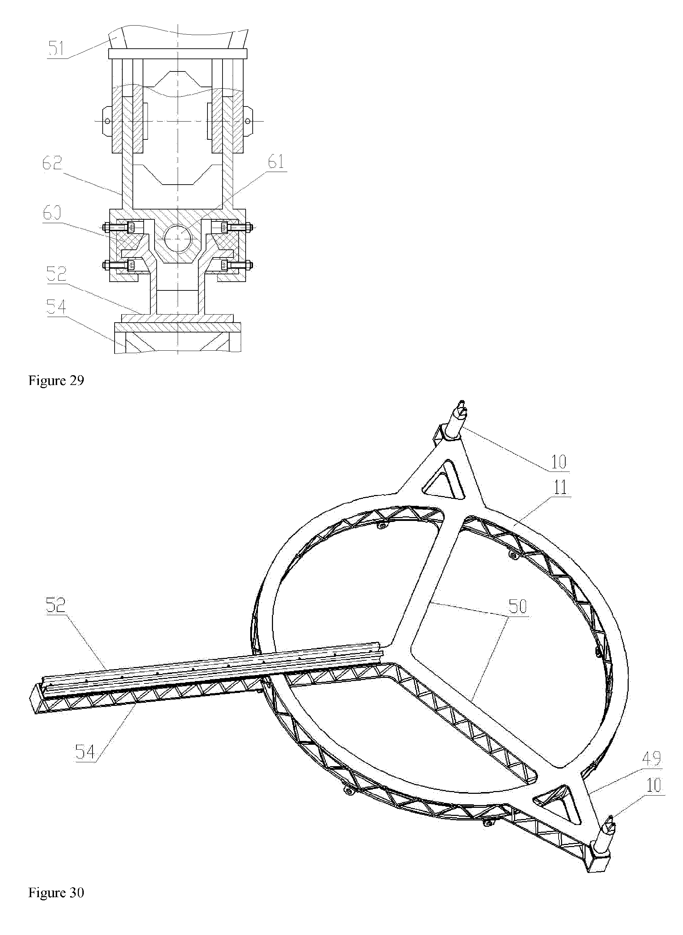

In another embodiment, as shown in Fig. 30 which is a structural diagram of the rigid turntable 11 of the dish-type solar concentration device of the present invention according to a fifth embodiment. In the figure, a "herringbone" straining beam 50 and an outrigger 54 passing through the inside and outside of the rigid turntable 11 are provided inside the rigid turntable 11, the inner end of the outrigger 54 being connected to the straining beam 50, a slide rail 52 being provided on the outrigger 54, a spur rack 53 being provided on the slide rail 52. As shown in Fig. 22 which is a structural diagram of the present invention according to a third embodiment; in the figure, the support is specifically a slide seat 55, and the driving mechanism comprises an elevation angle motor 15 provided on the slide seat 55, an elevation angle decelerator 16 and a movable supporting beam 51, the elevation angle decelerator 16 being provided with an elevation angle gear 57 engaged with the spur rack 53, the top end of the movable supporting beam 51 being connected to the dish-type supporting frame 5.

With such a structure, the elevation angle motor 15 after started provides motive power, and the motive power is transferred to the elevation angle decelerator 16 to drive the elevation angle gear 57 on the elevation angle decelerator 16 and the spur rack 53 on the slide rail 52 to do engaged movement. As both the elevation angle motor 15 and the elevation angle decelerator 16 are disposed on the slide seat 55, the movement of the elevation angle decelerator 16 drives the slide seat 55 to move on the slide rail 52, and further drives the bottom end of the movable support frame 51 to do reciprocating movement along the slide rail 52. Then, the elevation angle of the dish-type support 5 is adjusted.

With regard to the specific connection manner between the slide seat 55 and the slide rail 52, there may be several manners as follow.

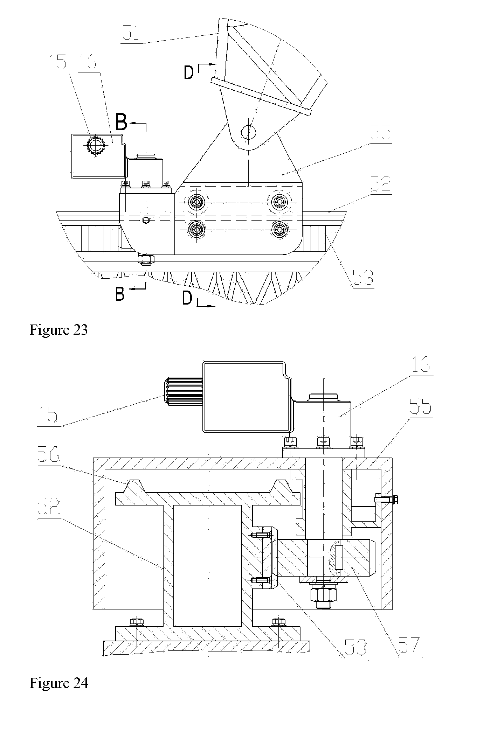

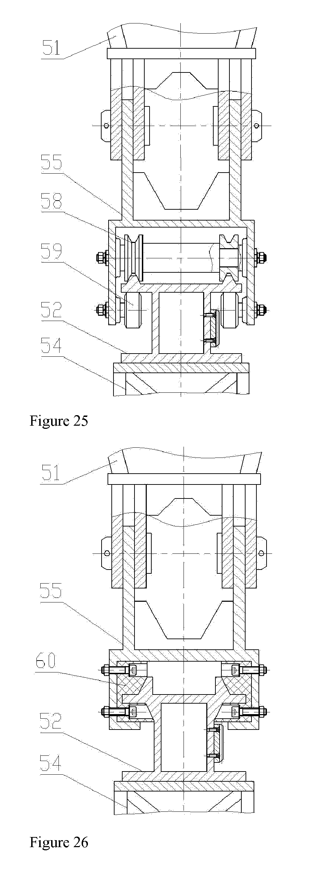

Referring to Figs. 23-25, Fig. 23 is a partially enlarged view of position II of Fig. 22; Fig. 24 is a cutaway view of Fig. 23, made along line B-B; and Fig. 25 is a structure diagram of a first embodiment of the cutaway view of Fig. 23, made along line D-D. In these drawings, the slide rail 52 may include a second limiting plate, a second web plate and a second mounting plate provided at the bottom end of the second web plate; a guide bar 56 is provided on the second limiting plate, and a second load bearing wheel 58 and a second limiting wheel 59 are provided on the bottom of the slide seat 55, a second recess fitted with the guide bar 56 being provided on the peripheral wall of the second load bearing wheel 58, the second limiting wheel 59 being connected to the second limiting plate in a rolling manner.

In addition to the above structure, the slide seat 55 and the slide rail 52 may be of the structure as shown in Fig. 26. Fig. 26 is a structural diagram of a second embodiment of the cutaway view of Fig. 23, made along line D-D. The slide rail 52 in the figure may further include a second limiting plate, a second web plate and a second mounting plate provided at the bottom end of the second web plate; and sliders 60 are provided on two sides inside the slide seat 55, a third recess fitted with the second limiting plate being provided on each of the sliders 60.

The sliding connection between the slide seat 55 and the slide rail 52 may be achieved by using either the structure where the guide bar 56 fits the second recess or the structure where the sliders 60 fit the second limiting plate. The user may choose according to actual requirements.

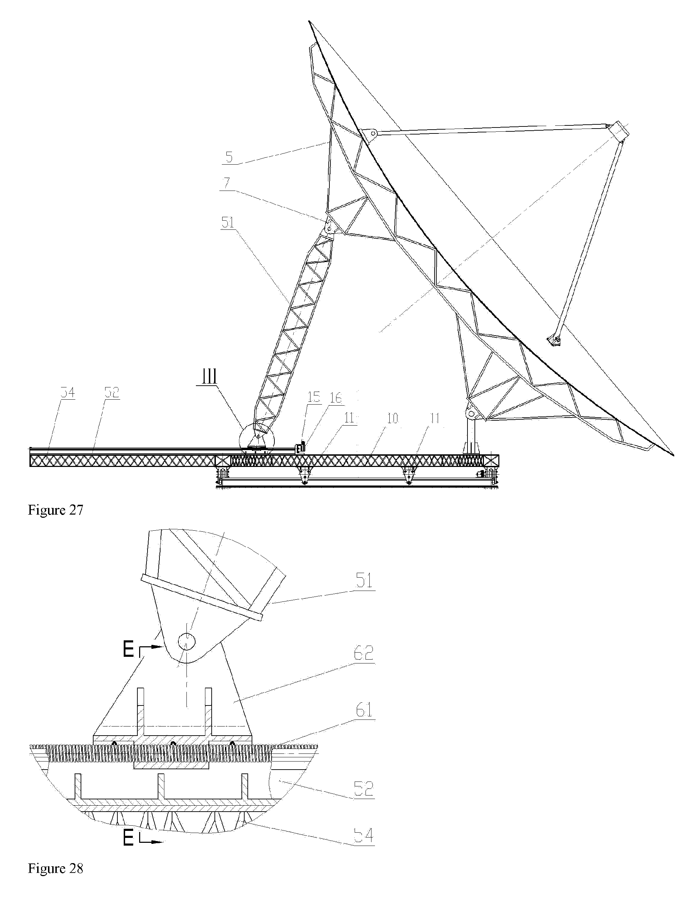

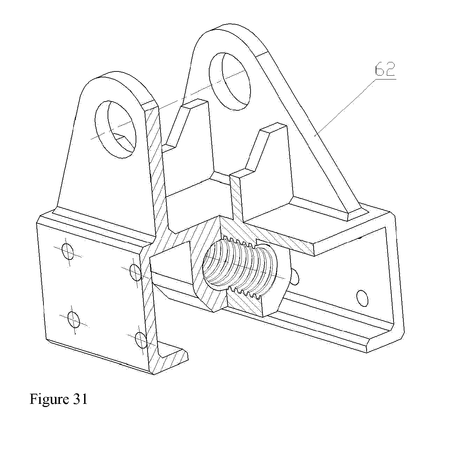

Referring to Figs. 27, 28 and 29 and Fig. 31, in combination with Fig. 30, Fig. 27 is a structural diagram of a fourth embodiment of the dish-type solar concentration device according to the present invention; Fig. 28 is a partially enlarged view of position III of Fig. 27; Fig. 29 is a cutaway view of Fig. 28, made along line E-E; and Fig. 31 is an isometric drawing of a movable support.

In another embodiment, as shown in Figs. 27-31, a "herringbone" straining beam 50 and an outrigger 54 passing through the inside and outside of the rigid turntable 11 are provided inside the rigid turntable 11, the inner end of the outrigger 54 being connected to the straining beam 50, the slide rail 52 being provided on the outrigger 54; and the support is specifically a movable support 62 in sliding connection with the slide rail 52; and the driving mechanism comprises a movable support frame 51 of which the top end and bottom end are respectively connected to the dish-type support frame 5 and the movable support 62, and further comprises the elevation angle motor 15 and the elevation angle decelerator 16 which are fixedly connected to the slide rail 52, threads being provided inside the movable support 62, the elevation angle decelerator 16 being connected to the movable support 62 by a screw rod 61 which is in fitting connection with the threads.

With such a structure form, after the elevation angle motor 15 outputs the motive power to the elevation angle decelerator 16, as the elevation angle decelerator 16 is connected to the movable support 62 by the screw rod 61, the torque of the elevation angle decelerator 16 drives the screw rod 61 to do rotary movement; and the rotary movement of the screw rod 61 drives the movable support 62 fitted with the screw rod 61 to do reciprocating movement along the slide rail 52, to drive the bottom end of the movable support 51 to do reciprocating movement along the slide rail 52. In this way, the elevation angle of the dish-type support frame 5 is further adjusted, and the stability and strength of the dish-type solar concentration device are guaranteed.

In another embodiment, there are two fixed legs 10 and one support in the dish-type solar concentration device, and the two fixed legs 10 are symmetrically provided on both sides of the support. As three points determine a plane, the use of such a three-point support structure may realize the stable support to the dish-type support frame 5. Furthermore, during the operating, the two fixed legs 10 and the support are stressed equally, thereby further enhancing the working stability of the dish-type support frame 5.

Further, the bottom end of the dish-type support frame 5 is provided with weights 6 on the outside of the fixed legs 10, the weights 6 being provided on the symmetry planes of the two fixed legs 10. In this way, during the adjustment of the elevation angle of the dish-type support frame 5 by the driving mechanism, the weights 6 may decrease the stress applied to the threaded rod 19 or movable support frame, so as to enhance the working reliability of the system.

The specific structure form of the rigid turntable 11 may be further configured.

Referring to Figs. 18-21, the four drawings are respectively structural diagrams of four embodiments of the rigid turntable 11 of the dish-type solar concentration device according to the present invention.

In an embodiment, as shown in Fig. 18, the support and the fixed legs 10 may be directly disposed on the rigid turntable 11. This allows the rigid turntable 11 to have the advantages of simple structure and convenient processing and manufacturing.

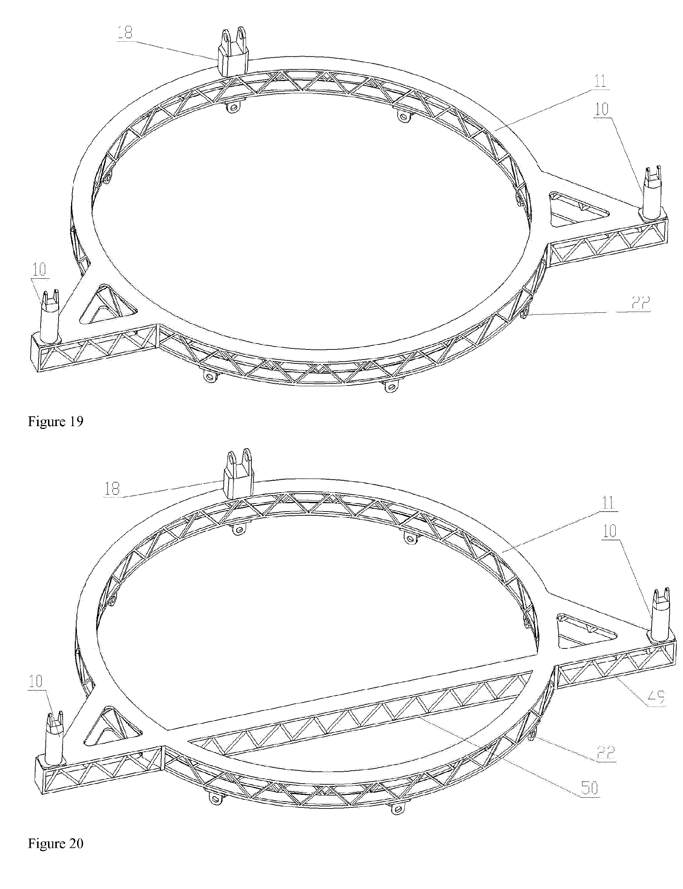

Certainly, as shown in Fig. 19, transverse outriggers 49 may be symmetrically connected to the outside of the rigid turntable 11, and the fixed legs are provided on the transverse outrigger 49. The transverse outrigger 49 may further reinforce the strength of the rigid turntable 11. Furthermore, the span between the supports disposed on the two transverse outriggers 49 is larger, so that the support stability to the dish-type support frame 5 is further guaranteed.

In addition, as shown in Fig. 20, a "-"-shaped straining beam 50 may be connected between the two transverse outriggers 49; or, as shown in Fig. 21, a "T"-shaped straining beam 50 may be connected between the two transverse outriggers 49, the two transverse ends of the "T"-shaped straining beam 50 being connected to the two transverse outriggers 49, respectively. Both "-"-shaped and "T"-shaped straining beams 50 can further reinforce the strength of the rigid turntable 11 and enhance the support stability to the dish-type support frame 5.

The dish-type solar concentration device provided by the present invention has been described in details. The principle and embodiments the present invention are depicted by individual examples herein. The description of the embodiments is merely used for assisting in understanding the method of the present invention and its core concept. It should be noted that various improvements and modifications may be made by an ordinary person skilled in the art to the present invention without departing from the principle of the present invention, and those improvements and modifications shall fall into the protection scope defined by the appended claims.

## Claims

1. A dish-type solar concentration device, comprising a reflection surface (3), a heat absorber (4) and a dish-type support frame (5) being provided above and below the reflection surface (3), respectively, **characterized in that** it further comprises a rigid turntable (11) and a circular orbit (27) fixed onto the ground, the rigid turntable (11) being connected in a rotary manner to the circular orbit (27) through a plurality of bearing wheels (12), at least one support and one fixed leg (10) being provided on the rigid turntable (11), a driving mechanism for adjusting an elevation angle of the dish-type support frame (5) being provided on the top end of the support, and the top end of the driving mechanism and the top end of the fixed leg (10) being articulated to the dish-type supporting frame (5) by two first horizontal articulating shafts (8) parallel to each other.

2. The dish-type solar concentration device according to claim 1, **characterized in that** it further comprises:
a sun azimuth detection component (1), a wind speed detection component (2), an azimuth angle detection component (13) and an elevation angle detection component (9), which are respectively used for detecting the sun azimuth, the current wind speed, and the azimuth angle and elevation angle of the dish-type support frame (5); and
a controller (21), connected to the sun azimuth detection component (1), the wind speed detection component (2), the azimuth angle detection component (13) and the elevation angle detection component (9), used for outputting a control signal according to the sun azimuth and the current wind speed, adjusting an azimuth angle of the rigid turntable (11) with respect to the circular orbit (27) and driving the driving mechanism to adjust the elevation angle of the dish-type supporting frame (5).

3. The dish-type solar concentration device according to claim 2, **characterized in that** the circular orbit (27) is provided with a transverse first limiting plate (41), a first web plate (42) disposed below the first limiting plate (41) and a first mounting plate (43) disposed at the bottom end of the first web plate (42);
among the plurality of the bearing wheels (12), a roller wheel and at least one power wheel are provided, each of the roller wheel and the power wheel comprising a wheel seat (22), a first load bearing wheel (23), a first limiting wheel (26) and at least one lateral support plate (25), the wheel seat (22) being connected to the bottom end of the rigid turntable (11), the first load bearing wheels (23) of both the roller wheel and the power wheel being respectively mounted on the wheel seat (22) by an axle (39) and a transmission shaft (24), the first load bearing wheel (23) being connected to the first limiting plate (41) by rolling fit; and the lateral support plate (25) is fixed on the outside of the wheel seat (22) while the first limiting wheel (26) is disposed on the inside of the bottom end of the lateral support plate (25), the first limiting wheel (26) being connected to the bottom wall of the first limiting plate (41) in a rolling manner; and
the power wheel further comprises an azimuth angle motor (29) driving the rigid turntable (11) to rotate with respect to the circular orbit (27) and an azimuth angle decelerator (30) connected to the output shaft of the azimuth angle motor (29).

4. The dish-type solar concentration device according to claim 3, **characterized in that** a first projection is provided at the top end of the first limiting plate (41), and a first recess fitted with the first projection is provided on the periphery of the first load bearing wheel (23);
or a side rack (33) is provided at the top end of the first limiting plate (41), and a first gear (34) engaged with the side rack (33) is provided on the periphery of the first load bearing wheel (23).

5. The dish-type solar concentration device according to claim 4, **characterized in that** the first projection is a guide rail (40) integrally formed with the circular orbit (27) or is a rail bar (45) connected to the circular orbit (27) by a first fastener (44).

6. The dish-type solar concentration device according to claim 3, **characterized in that** the output shaft of the azimuth angle decelerator (30) is connected to the transmission shaft (24);
or when there is only one lateral support plate (25) of the power wheel, a gear ring (35) is provided on the inside of the first web plate (42), and a cylindrical gear (36) engaged to the gear ring (35) is provided outside the output shaft of the azimuth angle decelerator (30), the azimuth angle decelerator (30) being connected to the wheel seat (22);
or when there is only one lateral support plate (25) of the power wheel, a gear ring (35) is provided on the inside of the rigid turntable (11), and a cylindrical gear (36) engaged to the gear ring (35) is provided outside the output shaft of the azimuth angle decelerator (30), the azimuth angle decelerator (30) being connected to the first web plate (42).

7. The dish-type solar concentration device according to claim 6, **characterized in that** when there is 1 lateral support plate (25) of the power wheel and the first limiting plate (41) is provided on one side of the first web plate (42), the circular orbit further comprises a rib plate (46), the top wall, side wall and bottom wall of the rib plate (46) being connected to the first limiting plate (41), the first web plate (42) and the first mounting plate (43), respectively.

8. The dish-type solar concentration device according to any one of claims 1 to 7, **characterized in that** the support is a fixed support (18), and the driving mechanism comprises an elevation angle motor (15), an elevation angle decelerator (16) provided at the output end of the elevating motor (15) and a threaded rod (19), the threaded rod (19) being articulated to the fixed support (18) by a second articulating shaft parallel to the first horizontal articulating shafts (8), the elevation angle decelerator(16) being a decelerator used for driving the threaded rod (19) to do axially telescopic movement with respect to the elevation angle decelerator(16).

9. The dish-type solar concentration device according to any one of claims 1 to 7, **characterized in that** a "herringbone" straining beam (50) and an outrigger (54) passing through the inside and outside of the rigid turntable (11) are provided inside the rigid turntable (11), the inner end of the outrigger (54) being connected to the straining beam (50), a slide rail (52) being provided on the outrigger (54), a spur rack (53) being provided on the slide rail (52);
the support is specifically a slide seat (55), and the driving mechanism comprises an elevation angle motor (15) provided on the slide seat (55), an elevation angle decelerator (16) and a movable supporting beam (51), the elevation angle decelerator (16) being provided with an elevation angle gear (57) engaged with the spur rack (53), the top end of the movable supporting beam (51) being connected to the dish-type supporting frame (5).

10. The dish-type solar concentration device according to claim 9, **characterized in that** the slide rail (52) comprises a second limiting plate, a second web plate and a second mounting plate provided at the bottom end of the second web plate;
a guide bar (56) is provided on the second limiting plate, and a second load bearing wheel (58) and a second limiting wheel (59) are provided on the bottom of the slide seat (55), a second recess fitted with the guide bar (56) being provided on the peripheral wall of the second load bearing wheel (58), the second limiting wheel (59) being connected to the second limiting plate in a rolling manner;
or sliders (60) are provided on two sides inside the slide seat (55), a third recess fitted with the second limiting plate being provided on each of the sliders (60).

11. The dish-type solar concentration device according to any one of claims 1 to 7, **characterized in that** a "herringbone" straining beam (50) and an outrigger (54) passing through the inside and outside of the rigid turntable (11) are provided inside the rigid turntable (11), the inner end of the outrigger (54) being connected to the straining beam (50), the slide rail (52) being provided on the outrigger (54);
the support is specifically a movable support (62) in sliding connection with the slide rail (52); and the driving mechanism comprises a movable support frame of which the top end and bottom end are respectively connected to the dish-type support frame (5) and the movable support (62), and further comprises the elevation angle motor (15) and the elevation angle decelerator (16) which are fixedly connected to the slide rail (52), threads being provided inside the movable support (62), the elevation angle decelerator (16) being connected to the movable support (62) by a screw rod (61) which is in fitting connection with the threads.

12. The dish-type solar concentration device according to any one of claims 1 to 7, **characterized in that** there are two fixed legs (10) and one support, and the two fixed legs (10) are symmetrically provided on two sides of the support.

13. The dish-type solar concentration device according to claim 12, **characterized in that** the bottom end of the dish-type support frame (5) is provided with weights (6) on the outside of the fixed legs (10), the weights (6) being provided on the symmetry planes of the two fixed legs (10).

14. The dish-type solar concentration device according to any one of claims 1 to 7, **characterized in that** transverse outriggers (49) are symmetrically connected to the outside of the rigid turntable (11), and the fixed legs (10) are provided on the transverse outriggers (49).

15. The dish-type solar concentration device according to claim 14, **characterized in that** a "-"-shaped straining beam (50) is connected between the two transverse outriggers (49); or, a "T"-shaped straining beam (50) is connected between the two transverse outriggers (49), the two transverse ends of the "T"-shaped straining beam (50) being connected to the two transverse outriggers (49), respectively.
